(19) **Europäisches Patentamt / European Patent Office / Office européen des brevets**

(11) **EP 1 308 940 B1**

(12) **EUROPEAN PATENT SPECIFICATION**

(45) Date of publication and mention
of the grant of the patent:
**18.07.2007 Bulletin 2007/29**

(51) Int Cl.:
**G11B 7/09** *(2006.01)* **G11B 7/095** *(2006.01)*

(21) Application number: **02025372.0**

(22) Date of filing: **27.08.1999**

(54) **Method for controlling servo/tracking/tilt error of disk recording/reproducing apparatus**

Verfahren zum Regeln des Servo-/Spurlage-/Neigungs- Fehlers eines Platten-Aufnahme-Wiedergabe-Gerät

Procédé pour correction d'erreurs d'asservissement/d'inclinaison/de suivi de piste dans une appareil d'enregistrement/ de reproduction de disque

(84) Designated Contracting States:
**DE FR GB NL**

(30) Priority: **29.08.1998 KR 9835421**
**29.08.1998 KR 9835422**
**13.03.1999 KR 9908482**

(43) Date of publication of application:
**07.05.2003 Bulletin 2003/19**

(62) Document number(s) of the earlier application(s) in accordance with Art. 76 EPC:
**99306812.1 / 0 984 436**

(73) Proprietor: **SAMSUNG ELECTRONICS CO., LTD.**
**Suwon-City, Kyungki-do (KR)**

(72) Inventors:
• **Joo, Seong-sin**
**Jangan-gu,**
**Suwon-city,**
**Kyungki-do (KR)**
• **Park, In-sik**
**615-801 Shinnamushil Kukdong**
**Suwon-si Gyeonggi-do 442-470 (KR)**
• **Ma, Byung-in**
**Suwon-city,**
**Kyungki-do (KR)**

• **Chung, Chong-sam**
**Sungnam-city,**
**Kyungki-do (KR)**
• **Yoo, Jang-hoon**
**Youngdeungpo-gu,**
**Seoul (KR)**
• **Ko, Jung-wan**
**Youngtong-dong, Gyeonggi-do, 442-470 (KR)**
• **Lee, Kyung-geun**
**Bundang-gu,**
**Sungnam-city,**
**Kyungki-do (KR)**
• **Seo, Joong-eon**
**Euiwang-city,**
**Kyungki-do (KR)**

(74) Representative: **Davies, Robert Ean et al**
**Appleyard Lees**
**15 Clare Road**
**Halifax HX1 2HY (GB)**

(56) References cited:
**EP-A- 0 210 330** **EP-A- 0 467 498**
**DE-A- 4 028 703** **GB-A- 2 307 770**
**US-A- 4 589 103** **US-A- 4 707 817**
**US-A- 5 523 989** **US-A- 5 732 054**

**Description**

The present invention relates to an optical recording/reproducing apparatus for recording digital data on a disk and reproducing digital data from a disk, and more particularly, to a method for detecting servo error by comparing the levels of synchronous signals recorded on the header area of a disk, an apparatus suitable for the method, a disk which guarantees the quality of a push-pull signal which is the basis of optimally controlling the servo, a method for controlling the servo of the recording/reproducing apparatus, a method for detecting a tracking error, and a method for detecting a tilt error.

The quality of a signal remarkably deteriorates due to a servo error such as the tilt and detrack of a disk as recording density becomes higher not only in a disk only for reproduction such as a DVD-ROM but also in a recordable disk such as a DVD-RAM. In particular, in the recordable disk, recording quality deteriorates due to the influence of the servo error when the servo error exists during recording and the deterioration of the quality of the signal becomes severe due to the servo error during the reproduction of a concerned part.

In a DVD-RAM disk, information is recorded on a track. The track is comprised of a land track and a groove track. The land track and the groove track alternate when the disk rotates once. The land track and the groove track are alternated in the DVD-RAM disk in order to provide a tracking guide in an initial stage and to reduce crosstalk between adjacent tracks in a high density narrow track.

The track is comprised of sectors having a uniform length. A pre-embossed header area is provided during the manufacturing of the disk as a means of physically dividing the sectors. The physical addresses of the sectors are recorded in the pre-embossed header area.

Each sector is comprised of a header area in which physical identification data (PID) is recorded and a data area.

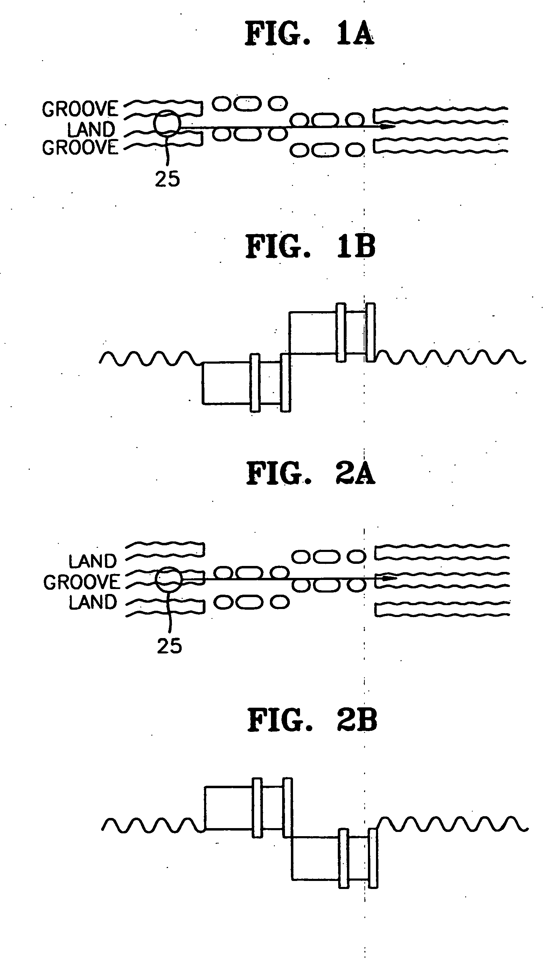

Figure 1A shows the physical shape of the land track in a DVD-RAM disk. Figure 1B shows the waveform of a push-pull signal in the land track.

The header area is repeatedly arranged in every sector of the track. Four PIDs (PID1 through PID4) having the same value are recorded in one header area. The PID1 and the PID2 are arranged to deviate from the center of the track by a certain amount and the PID3 and the PID4 are arranged to deviate from the center of the track to a direction opposite to that of the PID1 and PID2 so that the PIDs can be correctly read even if a laser spot 22 deviates from the center of the track. Also, the arrangements of the PID1 and PID2 and the PID3 and PID4 in the land track are opposite to those in the groove track. The push-pull signal shown in Figure 1B can be obtained in the land track.

Figure 2A shows the physical shape of the groove track in a DVD-RAM disk.

Figure 2B shows the waveform of the push-pull signal in the groove track.

Figure 3 shows the enlarged header area shown in Figures 1A through 2A. In the structure of the header area, the PID1 and PID2 and the PID3 and PID4 are arranged to deviate from the center of the track in opposite directions by a uniform amount. A vfo signal having a specified frequency for synchronizing and detecting ID and an ID signal showing the physical addresses of the sectors are recorded in the respective PIDs. The vfo signal has a recording pattern of 4T (T is a period of the clock signal).

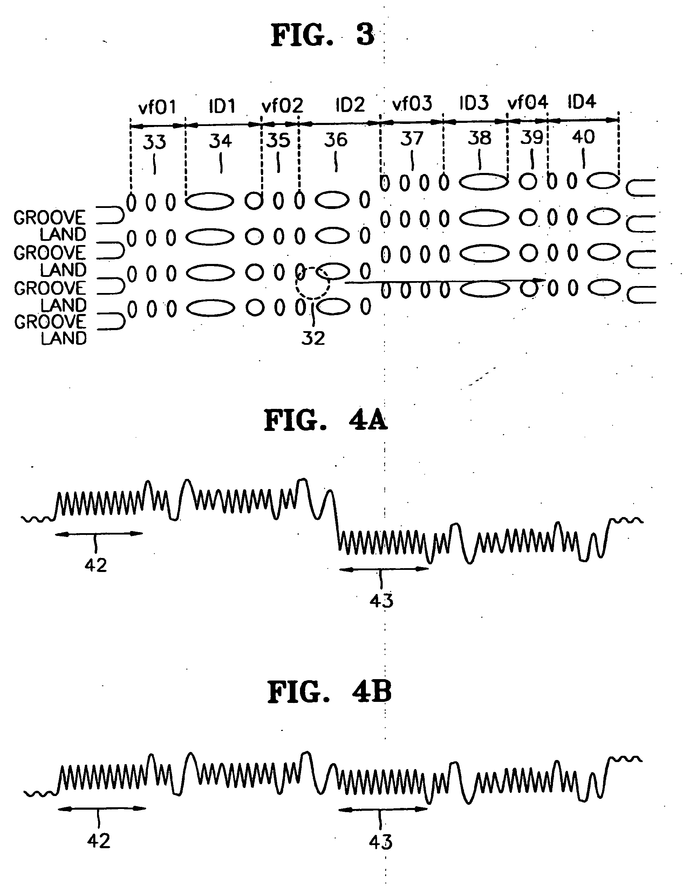

As shown in Figure 3, the header area is comprised of vfo1 33 and ID1 (PID1) 34, vfo2 35 and ID2 (PID2) 36, vfo3 37 and ID3 (PID3) 38, and vfo4 39 and ID4 (PID4) 40.

In Figure 3, when the laser spot passes through the header area of the groove track, a push-pull signal RF_pp shown in Figure 4A and a sum signal RF_sum shown in Figure 4B are obtained. In Figure 4A, a vfo1 signal 42 corresponds to the vfo1 signal area 33 of Figure 3. A vfo3 signal 43 corresponds to the vfo3 signal area 37.

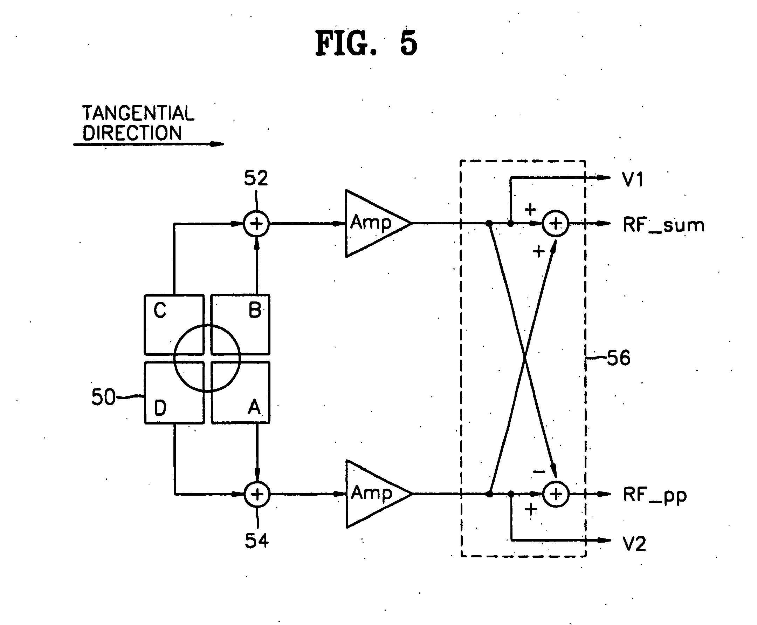

Figure 5 shows the structure of an apparatus for obtaining the push-pull signal shown in Figure 4A and the sum signal shown in Figure 4B. In Figure 5, reference numeral 50 denotes a photodetector divided into four sections. Reference numerals 52 and 54 denote adders. Reference numeral 56 denotes a calculator.

The apparatus shown in Figure 5 outputs the sum signal RF_sum of signals detected by light receiving elements A through D of the photodetector divided into four, sum signals V1 and V2 of radial pairs B and C, and A and D of respective light receiving elements, and the push-pull signal RF_pp which is a subtraction signal V2-V1 of V1 and V2.

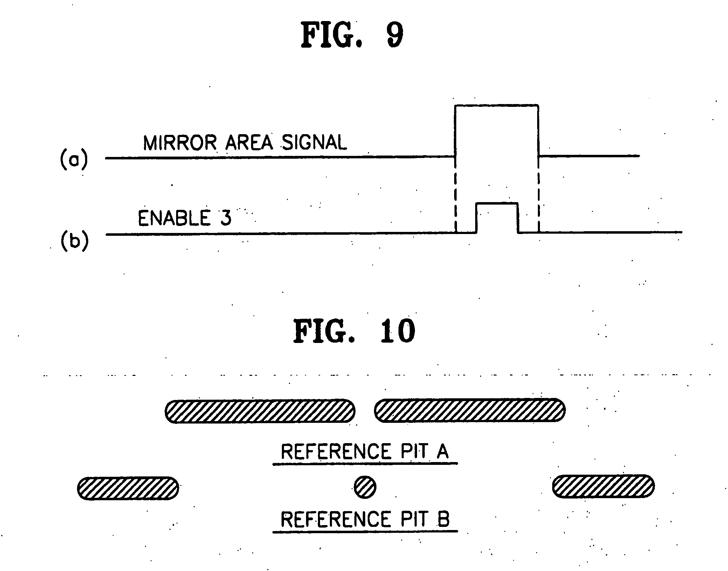

Figure 10 shows a conventional technology for compensating for tilt and a method for detecting the amount of tilt by a specific pattern recorded on the track of a disk. The specific pattern coincides with the proceeding direction of the track and the center of the track and is realized in the form of a reference pit A and/or a reference pit B.

It is possible to obtain tilt information by comparing signals reproduced from the reference patterns shown in Figure 10 with each other and to thus operate a tilt compensating equipment according to the obtained tilt information or to compensate for the signals by changing the equalizer coefficient of the reproducing signal.

The reference patterns shown in Figure 10 are located in an arbitrary position in the disk and are useful for detecting tangential tilt (tilt in a track direction).

However, in the conventional technology shown in Figure 10, the length of the reference pattern for detecting the tilt is too short. Another pattern is necessary in order to detect the correct position of the tilt pattern. Also, radial tilt (tilt in a radial direction) cannot be detected. Since the radial tilt is larger than the tangential tilt in practice, the reference patterns are not so useful.

Since it is necessary to precisely manage the servo for the recording/reproducing apparatus to maintain an optimal recording/reproducing state, it is necessary to manage the servo error signal in high resolution.

However, the precision of the servo error signal varies depending on the disk or the reproducing apparatus. Accordingly, it is difficult to precisely manage the servo.

GB-A-2,307,770 discloses an optical disk having recording tracks on lands and grooves which may be in the form of a single spiral of lands and grooves connected at connecting points. Header portions defining disk sectors each include a recognition pattern, formed as a sequence of pits, which is distinguished from other data on the disk by having a unique characteristics, e.g. a different modulation not shared by the other data. The recognition pattern includes an ID to indicate whether the following track portion is a land or groove and data which is used to ensure correct tracking and rotation control.

EP-A-0,210,330 discloses a composite wobbled tracking servo system using a rotary optical disc which has a header field and a data field alternately arranged along the direction of rotation to provide a sector, and which includes pregrooves formed in at least the data field and at least one pair of wobbled track marks disposed in the header field in a relation wobbled relative to the center of a track. A light spot is directed toward and onto the optical disc to detect a push-pull tracking error signal - from the reflection of the light spot diffracted by the pregroove, and a wobbled tracking error signal is detected from the reflection of the light spot traversing the wobbled track mark. The push-pull tracking error signal is corrected on the basis of the wobbled tracking error signal to attain the tracking control with higher accuracy, thereby eliminating an undesirable track offset attributable to tilting or eccentricity of the optical disc.

It is an aim of the present invention to provide a method for controlling the servo of a recording/reproducing apparatus.

According to one aspect of the invention, there is provided a method of detecting a servo error of a recording and/or reproducing apparatus for recording data on and reproducing data from a disk in a data area of which reference patterns having a uniform size are recorded, the method comprising:

> determining a first magnitude of the reference patterns recorded on at least two positions separated from each other and a second magnitude of a reproducing signal corresponding to the reference patterns; and
> detecting the servo error in accordance with a ratio of the first magnitude to the second magnitude.

The disk may be divided into sectors and each reference pattern may be a synchronous signal included in a header area in which the addresses of the sectors are recorded.

The disk may comprise a land track and a groove track and each reference pattern may be a wobble signal for separating the land track from the groove track in a radial direction of the disk.

Another aspect of the invention provides a method of detecting a servo error of an apparatus for reproducing data from an optical disk in which a recording area is divided into sectors, each sector has a header for indicating an address, each header has a first header and a second header which are recorded to deviate from a center of a track in opposite directions, and the first header and the second header have address areas in which address signals of the sectors are recorded and synchronous signal areas in which synchronous signals for detecting the address signals recorded in the address areas are recorded, the method comprising:

> determining a level Ivfo1 of a first synchronous signal of a reproducing signal in the first header and a level Ivfo3 of a second synchronous signal in the second header; and
> detecting a servo error in accordance with a ratio of a magnitude of Ivfo1 to a magnitude of Ivfo3.

The magnitude ratio may be (Ivfo1-Ivfo3)/(Ivfo1+Ivfo3).

The magnitude ratio may be (Ivfo1-Ivfo3)/Io, wherein Io is a level of a mirror signal.

The reproducing signal may be a sum signal of radial pairs in a photodetector divided into four sections.

The reproducing signal may be a push-pull signal RF_pp and the detected servo error may be a tilt error signal.

The reproducing signal may be a sum signal RF_sum and the detected servo error may be a tracking error signal.

The detecting of the servo error may comprise determining the magnitude ratio by averaging magnitude ratios obtained from a plurality of sectors adjacent to each other in a tangential direction.

The detecting of the servo error may comprise determining the magnitude ratio by averaging magnitude ratios obtained from a plurality of sectors adjacent to each other in a radial direction.

The optical disk may have a plurality of land/groove tracks, and the method may further comprise inverting the magnitude ratio in each land/groove track.

According to another aspect of the invention, there is provided a method of recording data on and reproducing data from a disk in which a recording area is divided into sectors, each sector has a header comprising an address, each header has a first header and a second header recorded to deviate from a center of the track in opposite directions, and the first header and the second header have address areas in which address signals of sectors are recorded and synchronous signal areas in which synchronous signals for detecting the address signals recorded in the address areas are recorded, the method comprising:

determining a first magnitude Ivfo1 of the synchronous clock signal in the first header and a second magnitude Ivfo3 of the synchronous clock signal in the second header and

controlling a servo so that the ratio of the first magnitude Ivfo1 to the second magnitude Ivfo3 satisfies a predetermined restricted value.

The restricted value may be $\pm$ 0.1.

A further aspect provides a method of detecting a servo error of an apparatus for reproducing data from an optical disk having a first reference signal and a second reference signal which are recorded to deviate from a center of a track in opposite directions and which have the same pattern, the method comprising:

determining a first level Ivfo1 of the first reference signal and a second level Ivfo3 of the second reference signal from a reproducing signal reproduced from the optical disk; and

determining a balance value $K_1$ according to the following equation:

$$K_1 = (Ivfo1 - Ivfo3)/(Ivfo1 + Ivfo3);$$

and

detecting the servo error based upon the balance value $K_1$.

The disk may be divided into sectors having a predetermined length on the track, each sector comprises the first and second reference signals, and the method may further comprise determining balance values obtained from adjacent ones of the sectors and averaging the balance values to detect the servo error.

In a further aspect, there is provided a method of detecting a tracking error of an apparatus for reproducing data from an optical disk having a first reference signal and a second reference signal which are recorded to deviate from a center of a track in opposite directions and which have the same pattern, the method comprising:

determining a first level Ivfo1 of the first reference signal and a second level Ivfo3 of the second reference signal from a reproducing signal reproduced from the optical disk; and

determining a balance value $K_1$ according to the following equation: $K_2 = (Ivfo1 - Ivfo3) / (Ivfo1 + Ivfo3)$ ; and detecting the tracking error based upon the balance value $K_1$.

The disk may be divided into sectors having a predetermined length on the track, each sector comprises the first and second reference signals, and the method may further comprise determining balance values obtained from adjacent ones of the sectors and averaging the balance values to detect the tracking error.

In a further aspect, there is provided a method of detecting a tilt error of an apparatus for reproducing data from an optical disk in accordance with a subtraction signal RF_pp having a first reference signal and a second reference signal which are recorded to deviate from a center of a track in opposite directions and which have the same pattern, the method comprising:

determining a first level Ivfo1 of the first reference signal and a second level Ivfo3 of the second reference signal from a subtraction signal RF_pp reproduced from the optical disk;

determining a balance value $K_1$ according to the following equation: $K_1 = (Ivfo1 - Ivfo3) / (Ivfo1 + Ivfo3)$ ; and detecting the tilt error based upon the balance value $K_1$.

The disk may be divided into sectors having a predetermined length on the track, each sector comprises the first and second reference signals, and the method may further comprise determining balance values obtained from adjacent ones of the sectors and averaging the balance values to detect the tilt error.

In another aspect, there is provided a method of detecting a servo error of a disk, comprising:

determining a first magnitude I1 of uniformly sized reference patterns recorded on at least two positions of an area of the disk, and determining a second magnitude I2 of a reproducing signal corresponding to the reference patterns; and

detecting a servo error based on a magnitude ratio of I1 to I2.

The disk may be divided into sectors and each reference pattern may be a synchronous signal included in a header area in which addresses of the sectors are recorded.

The disk may comprise a land track and groove track and each reference pattern is a wobble signal separating the land track from groove track.

The magnitude ratio may be (I1-I2)/(I1+I2).

The magnitude ratio may be (I1-I2)/Io, where Io is a level of a mirror signal.

The reproducing signal may be a signal from sections of a photodetector divided into sections.

Detecting of servo error based on a magnitude ratio may include averaging magnitude ratios obtained from a plurality of sectors of the disk adjacent to each other.

In a further aspect, there is provided a method for recording data on and/or reproducing data from a disk in which a recording area is divided into sectors, each sector has a header for indicating an address, each header has a first header and a second header which are recorded to deviate from a center of a track in opposite directions, and the first header and the second header have address areas in which address signals of the sectors are recorded and synchronous signal areas in which synchronous signals for detecting the address signals recorded in the address area are recorded, the method comprising:

generating a reproducing signal including sum signals V1 and V2 of radial pairs of detecting elements, a sum signal RF_sum of the detecting elements, and a push-pull signal RF_pp of the detecting elements, from an optical signal reflected from the disk;

generating a header area signal having a header area from the reproducing signal received from the reproducing signal generator;

detecting a first synchronous signal level by detecting a first magnitude Ivfo1 of a first synchronous signal in the first header;

detecting a second synchronous signal level by detecting a second magnitude Ivfo3 of a second synchronous signal in the second header; and

calculating a balance value $K_1$, of the magnitude Ivfo1 of the first synchronous signal and the magnitude Ivfo3 of the second synchronous signal.

The method may further comprise comparing the balance value $K_1$ with a reference value $K_o$, and determining a difference $K_t$ between the balance value $K_1$ and the reference value $K_o$.

The reference value $K_o$ may be a balance value measured in a regularized reference state.

The disk may comprise a land track, a groove track, and a wobble for separating the land track from the groove track, and wherein the method may further include determining an amount of a detrack by an amount of variation of a wobble signal produced by the wobble in a radial direction.

The calculation of the balance value $K_1$ may be based on the equation $(Ivfo1-Ivfo3)/(Ivfo1+Ivfo3)$.

According, to one aspect of the invention, there is provided a method for detecting servo error of an apparatus for recording data on and reproducing data from a disk in the data area of which reference patterns having a uniform size are recorded, wherein the servo error of the recording/reproducing apparatus is detected by the ratio of the magnitude of the reference patterns recorded on at least two positions separated from each other to the magnitude of the reproducing signal corresponding to the reference patterns.

The disk is preferably divided into sectors and the reference pattern is a synchronous signal included in a header area in which the addresses of the sectors are recorded.

The disk may be comprised of a land track and a groove track and the reference pattern is a wobble signal for separating the land track from the groove track in the radial direction of the disk.

Another aspect of the invention provides a method for detecting the servo error of an apparatus for reproducing data from an optical disk in which a recording area is divided into sectors, each sector has a header for notifying an address, a header has a first header and a second header which are recorded to deviate from the center of the track in opposite directions, and the first header and the second header have address areas in which the addresses of sectors are recorded and synchronous signal areas in which synchronous signals for detecting the address signals recorded in the address areas are recorded, wherein, when the level of the synchronous signal of the reproducing signal in the first header is Ivfo1 and the level of the synchronous signal in the second header is Ivfo3, the servo error is detected by the ratio of the magnitude of Ivfo1 to the magnitude of Ivfo3.

The magnitude ratio is preferably (Ivfo1-Ivfo3)/(Ivfo1+Ivfo3).

The magnitude ratio may be (Ivfo1-Ivfo3)/Io, wherein Io is the level of a mirror signal.

The reproducing signal may be a sum signal (V1 or V2) of radial pairs in a photodetector divided into four sections.

The reproducing signal may be a push-pull signal RF_pp and the detected servo error signal is a tilt error signal.

The reproducing signal may be a sum signal RF_sum and the detected servo error signal is a tracking error signal.

The magnitude ratio may be obtained by averaging the magnitude ratios obtained from a plurality of sectors adjacent to each other in a tangential direction.

The magnitude ratio may be obtained by averaging the magnitude ratios obtained from a plurality of sectors adjacent to each other in a radial direction.

The magnitude ratio is preferably inverted in every land/groove track.

According to another aspect of the invention, there is provided an apparatus for recording data on and reproducing data from a disk in which a recording area is divided into sectors, each sector has a header for notifying an address, a header has a first header and a second header which are recorded to deviate from the center of the track in opposite directions, and the first header and the second header have address areas in which the addresses of sectors are recorded and synchronous signal areas in which synchronous signals for detecting the address signals recorded in the address area are recorded, comprising a reproducing signal generator for generating a reproducing signal including sum signals V1 and V2 of radial pairs, a sum signal RF_sum, and a push-pull signal RF_pp from an optical signal reflected from the disk, a header area detector for generating a header area signal comprising a header area from the reproducing signal received from the reproducing signal generator, a first synchronous signal level detector for receiving the output of the reproducing signal generator and detecting the magnitude Ivfo1 of a synchronous signal in the first header by being synchronized with the header area signal received from the header area detector, a second synchronous signal level detector for receiving the output of the reproducing signal generator and detecting the magnitude Ivfo3 of a synchronous signal in the second header by being synchronized with the header area signal received from the header area detector, and a balance calculator for calculating the balance of the magnitude Ivfo1 of the first synchronous signal detected by the first synchronous signal level detector and the magnitude Ivfo3 of the second synchronous signal detected by the second synchronous signal level detector.

A comparator may be provided for comparing the balance value $K_1$ calculated by the balance calculator with a reference value $K_0$ and outputting a difference $K_t$ between the two values.

The reference valued $K_0$ may be a balance value measured in a regularized reference state.

The disk may comprise a land track, a groove track, and a wobble for separating the land track from the groove track, and the amount of the detrack is determined by the amount of variation of a wobble signal produced by the wobble in a radial direction.

The balance values $K_l$ output from the balance calculator is preferably determined to be (Ivfo1-Ivfo3)/(Ivfol+Ivfo3).

The disk may comprise a land track and a groove track, and the apparatus further comprise a polarity inverter for inverting the polarity of the difference $K_t$ according to the land/groove tracks.

The apparatus may further comprise a land/groove detector for receiving the reproducing signal provided by the reproducing signal generator, detecting the land/groove tracks, and providing the detection result to the polarity inverter.

A tilt controller may be provided for controlling tilt according to the output of the polarity inverter.

The first synchronous signal level detector and the second synchronous signal level detector preferably detect the level of a synchronous signal from the push-pull signal RF_pp generated by the reproducing signal generator.

The reference value $K_0$ may be the measured balance value when there is no tilt.

A tracking controller may be provided for compensating for detrack according to the output of the polarity inverter.

The reference value $K_0$ may be the balance value measured when there is no detrack.

The first synchronous signal level detector and the second synchronous signal level detector preferably detect the level of a synchronous signal from the sum signal RF_sum generated by the reproducing signal generator.

The apparatus may further comprise: a mirror area signal generator for generating a mirror area signal notifying a mirror area from the sum signal RF_sum in the reproducing signal provided by the reproducing signal generator; and a mirror signal level detector for receiving the sum signal RF_sum in the reproducing signal provided by the reproducing signal generator and detecting the level (Io) of the mirror signal by being synchronized with the mirror area signal generated by the mirror area signal generator, wherein the balance calculator calculates the balance by the level (Ivfo1) of a first synchronous signal detected by the first synchronous signal level detector, the level (Ivfo3) of a second synchronous signal detected by the second synchronous signal level detector, and the mirror signal level (Io).

The balance value $K_1$ output from the balance calculator may be determined to be (Ivfo1-Ivfo3)/Io.

According to a further aspect, there is provided a disk in which, when the magnitude of a synchronous clock signal in a peak header is Ivfo1 and the magnitude of the synchronous clock signal in a bottom header is Ivfo3, the ratio of the magnitude of Ivfo1 to the magnitude of Ivfo3 has a predetermined restricted value.

Preferably, the disk is one in which a disk in which a data area is divided into sectors, each sector has a header comprising an address, a header has a first header and a second header which are recorded to deviate from the center of the track in opposite directions, and the first header and the second header have address areas in which the addresses of sectors are recorded and synchronous signal areas in which synchronous signals for detecting the address signals recorded in the address areas are recorded, wherein, when the magnitude of the synchronous clock signal detected from the first is Ivfo1 and the magnitude of the synchronous clock signal detected from the second header is Ivfo3, the disk comprises pits corresponding to the synchronous outputs of the first and second headers so that the ratio of the magnitude of Ivfo1 to the magnitude of Ivfo3 has a predetermined restricted value.

The magnitude ratio is preferably no more than $\pm 0.1$.

The magnitude ratio may be determined to be (Ivfo1-Ivfo3)/Io, wherein Io is the magnitude of the mirror signal.

Ivfo1 and Ivfo3 are preferably detected from the subtraction signal RF_pp.

Ivfo1 and Ivfo3 are preferably detected from the sum signal RF_sum.

Ivfo1 and Ivfo3 preferably are detected from the subtraction signal RF_pp.

Ivfo1 and Ivfo3 may be detected from the sum signal RF_sum.

According to another aspect, there is provided an apparatus for recording data on and reproducing data from a disk in which a recording area is divided into sectors, each sector has a header comprising an address, a header has a first header and a second header recorded to deviate from the center of the track in opposite directions, and the first header and the second header have address areas in which the addresses of sectors are recorded and synchronous signal areas in which synchronous signals for detecting the address signals recorded in the address areas are recorded, wherein, when the magnitude of the synchronous clock signal in the first header is Ivfo1 and the magnitude of the synchronous clock signal in the second header is Ivfo3, the servo is controlled so that the ratio of the Ivfo1 to the Ivfo3 satisfies a predetermined restricted value.

The restricted value is preferably $\pm 0.1$.

A further aspect provides a method for detecting the servo error of an apparatus for reproducing data from an optical disk having a first reference signal and a second reference signal which are recorded to deviate from the center of the track in opposite directions and which have the same pattern, wherein, when the level of the first reference signal is Ivfo1 and the level of the second reference signal is Ivfo3 in the reproducing signal reproduced from the optical disk, the servo error is detected by the balance value $K_1$ determined by the following Equation:

$$K_1=(Ivfo1-Ivfo3)/(Ivfo1+Ivfo3)$$

The disk may be divided into sectors having a predetermined length on a track, each sector comprises the reference signals, and the balance values obtained from adjacent sectors are averaged.

In a yet further aspect, there is provided a method for detecting the tracking error of an apparatus for reproducing data from an optical disk having a first reference signal and a second reference signal which are recorded to deviate from the center of the track in opposite directions and which have the same pattern, wherein, when the level of the first reference signal is Ivfo1 and the level of the second reference signal is Ivfo3 in the reproducing signal reproduced from the optical disk, the tracking error is detected by the balance value $K_1$ determined by the following Equation:

$$K_1=(Ivfo1-Ivfo3)/(Ivfo1+Ivfo3).$$

The disk may be divided into sectors having a predetermined length on a track, each sector comprises the reference signals, and the balance values obtained from adjacent sectors are averaged.

In a yet further aspect, there is provided a method for detecting the tilt error of an apparatus for reproducing data from an optical disk having a first reference signal and a second reference signal which are recorded to deviate from the center of the track in opposite directions and which have the same pattern, wherein, when the level of the first reference signal is Ivfo1 and the level of the second reference signal is Ivfo3 in the subtraction signal RF_pp reproduced from the optical disk, the tilt error is detected by the balance value $K_1$ determined by the following Equation: $K_1=(Ivfo1-Ivfo3)/(Ivfo1+Ivfo3)$.

The disk is preferably divided into sectors having a predetermined length on a track, each sector comprises the reference signals, and the balance values obtained from adjacent sectors are averaged.

In another aspect, there is provided a method for controlling a servo in which, when the magnitude of the synchronous clock signal in the peak header is Ivfo1 and the magnitude of the synchronous clock signal in a bottom header is Ivfo3, tilt is controlled so that the ratio of the magnitude of Ivfo1 to the magnitude of the Ivfo3 satisfies a predetermined restricted value.

For a better understanding of the invention, and to show how embodiments of the same may be carried into effect, reference will now be made, by way of example, to the accompanying diagrammatic drawings in which:

Figure 1A shows the physical shape of a land track;

Figure 1B shows the waveform of a push-pull signal in the land track;

Figure 2A shows the physical shape of a groove track;

Figure 2B shows the waveform of a push-pull signal in the groove track;

Figure 3 shows an enlarged header area shown in Figures 1A and 2A;

Figures 4A and 4B show a push-pull signal and a sum signal which are obtained when a laser spot passes through the header area of the groove track in Figure 3;

Figure 5 shows the structure of an apparatus for obtaining the reproducing signal shown in Figure 4;

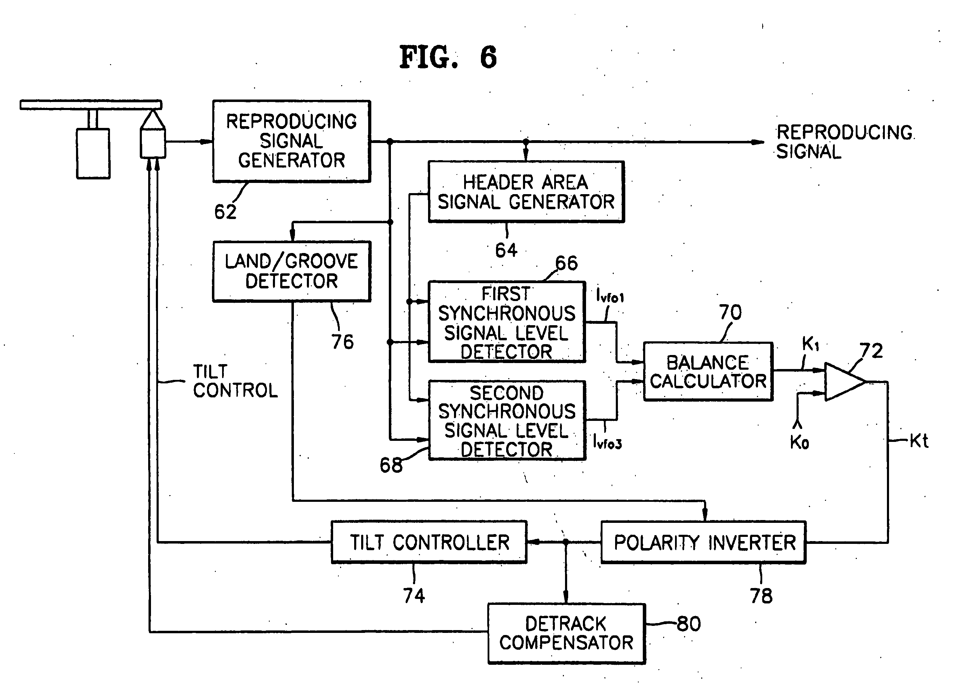

Figure 6 is a block diagram showing the structure of an embodiment of an apparatus for detecting a servo error according to the present invention;

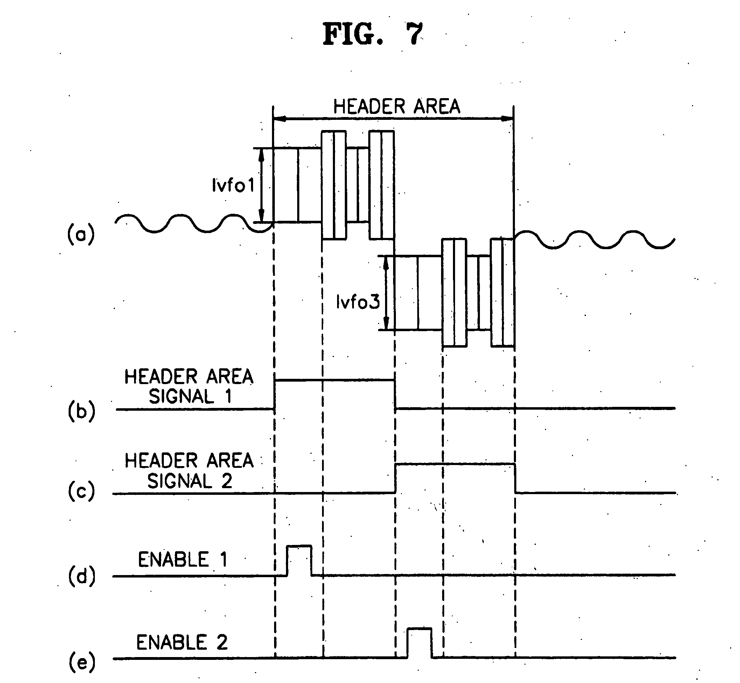

Figures 7A through 7E show waveforms during the operation of the apparatus shown in Figure 6;

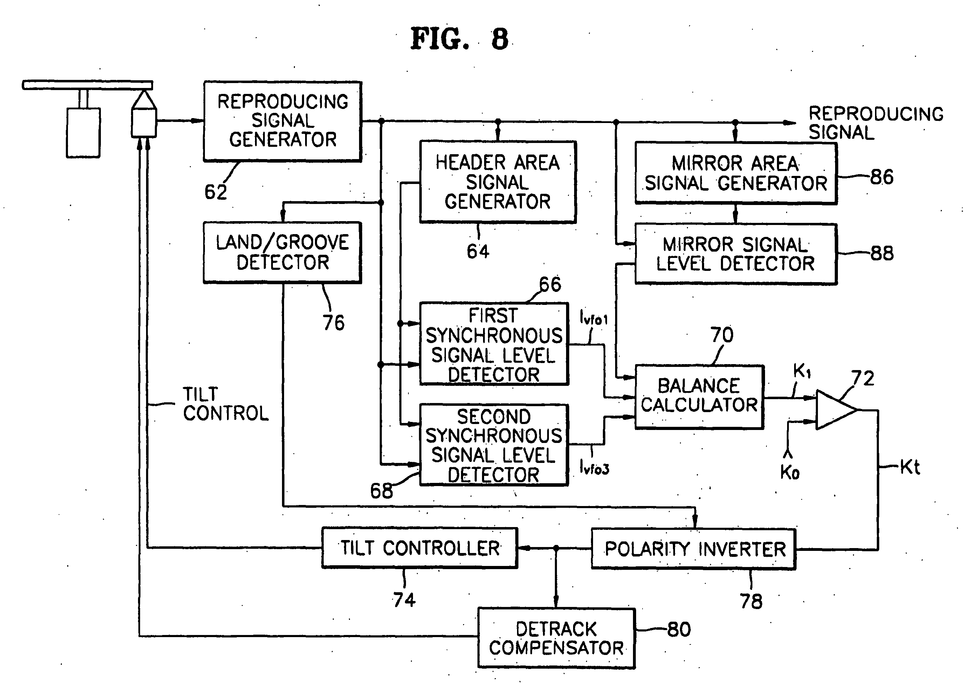

Figure 8 is a block diagram showing the structure of another embodiment of the apparatus for detecting the servo error according to the present invention;

Figures 9A through 9B show waveforms during the operation of the apparatus shown in Figure 8;

Figure 10 shows a conventional technology for correcting tilt;

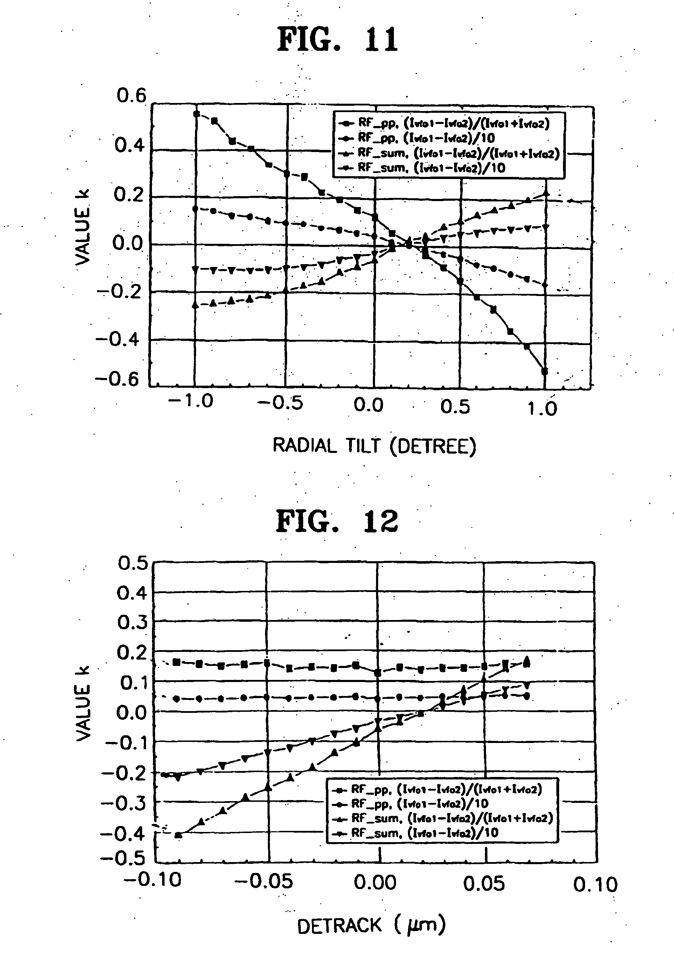

Figure 11 is a graph showing the relationship between radial tilt and a balance value K in the method and apparatus according to embodiments of the present invention; and

Figure 12 is a graph showing the relationship between detrack and the balance value K in the method and apparatus according to embodiments of the present invention.

Hereinafter, the structure and operation of embodiments of the present invention will be described in detail with reference to the attached drawings.

For example, in a push-pull signal, the ratio of the magnitude of the signal PID1 and PID2 to the magnitude of the signal PID3 and PID4 varies by up to 30%, depending on the disk. When such a signal is used as a reference signal for controlling a servo, it is difficult to precisely manage the servo and maintain optimal recording/reproducing states.

In the method for detecting the servo error according to embodiments of the present invention, a servo error is detected by the ratio of the magnitude of reference patterns regularly recorded on a disk to the magnitude of a reproducing signal corresponding to the reference patterns. Reference patterns could include a synchronous signal recorded in a header area and a wobble signal recorded in the direction of the track of a disk.

First, a method for detecting the servo error using the synchronous signal recorded in the header area will be described. When the optical axis of a laser spot is vertical to the header area, namely, when tilt in a radial direction does not occur, the magnitude (Ivfo1) of a detected vfo1 signal is approximately equal to the magnitude (Ivfo3) of a vfo3 signal. However, in the case that tilt or detrack occurs, when either the Ivfo1 or the Ivfo3 becomes large, the other becomes small.

This is because the intensity of light reflected from the PID1 and PID2 and the PID3 and PID4, which are arranged to deviate from the center of the track in opposite directions, varies in relation to the tilt of the disk although the light spot tracks the center of the track. When the disk is tilted to the inner side, the intensity of light reflected from an upper header (a peak header) is larger than that reflected from a lower header (a bottom header) as shown in Figures 1A through 2A.

Accordingly, the ratio of the magnitude Ivfo1 of the vfo1 signal to the magnitude Ivfo3 of the vfo3 signal varies. Also, the ratio of the magnitude Ivfo2 of a vfo2 signal to the magnitude Ivfo4 of a vfo4 signal varies.

In order to detect the degree to which the magnitude ratio varies, a signal recorded at a uniform level should be used. Since a vfo signals have uniform levels and frequencies, the vfo signals are suitable for this purpose. Also, it is easier to detect the magnitude of the vfo1 and vfo3 signals than that of the vfo2 and vfo4 signals.

Here, when the magnitudes of the synchronous signals detected in vfo1 and vfo3 areas are Ivfo1 and Ivfo3, a balance value K is defined as follows:

$$K=(Ivfo_1-Ivfo_3)/(Ivfo_1+Ivfo_3) \quad \ldots\ldots (1)$$

or

$$K=(Ivfo_1-Ivfo_3)/Io \quad \ldots\ldots (2)$$

wherein, Io is the magnitude of the sum signal RF_sum in the mirror area.

In Equations 1 and 2, the balance value is calculated using the magnitude of the synchronous signals detected from the areas vfo1 and vfo3. While it is possible to calculate the balance value using the magnitude of the synchronous signals detected from the areas vfo2 and vfo4, it is easier to detect the synchronous signals from the areas vfo1 and vfo3 than from the areas vfo2 and vfo4. Also, it is possible to use the value obtained by the combination of the synchronous signals detected in the areas vfo1 and vfo2 and the value obtained by the combination of the synchronous signals detected in the areas vfo3 and vfo4.

When the balance value K obtained in the case that there is no servo error is $K_0$, and the balance value K obtained in the case that a servo error exists is $K_1$, the difference between the two values is defined as follows:

$$K_1=K_0-K_1 \quad \ldots\ldots (3)$$

Namely, it is possible to know the direction and magnitude of the servo error according to the value and sign of $K_t$.

Here, $K_0$ may be the value measured in a state where there is no servo error, a default value determined by the system controller of a recording/reproducing apparatus, or a value measured in a reference state determined by the system.

In the land track and the groove track, the polarity of $K_t$ should vary in order to calculate $K_t$ correctly since the position of PID1 and PID2 and the position of PID3 and PID4 are inversed.

A method for detecting the servo error of the disk using the wobble signal will now be described. Wobble is formed in the land track and the groove track in the DVD-RAM disk. The wobble is in the form of a sinusoidal wave formed on the side wall of the track.

When the disk is tilted in a radial direction, the wobble signal is tilted in the radial direction. Namely, the magnitude of the wobble signal varies between two arbitrary points separated from each other in the radial direction. Therefore, it is possible to detect tilt by detecting the amount of change of the wobble signal in the radial direction.

Figure 6 is a block diagram showing the structure of a preferred embodiment of the apparatus for detecting the servo error signal according to the present invention. The apparatus shown in Figure 6 includes a reproducing signal generator 62, a header area detector 64, a first synchronous signal level detector 66, a second synchronous signal level detector 68, a balance calculator 70, a comparator 72, a land/groove detector 76, a tilt controller 74, a polarity inverter 78, and a detrack compensator 80.

The reproducing signal generator 62 generates a sum signal RF_sum, sum signals V1 and V2 of radial pairs, and a push-pull signal RF_pp obtained by subtracting V1 from V2. The reproducing signal generator 62 includes the photodetector divided into four and a calculator as shown in Figure 5.

The header area detector 64 generates header area signals (a header area signal 1 and a header area signal 2) showing the header area from the reproducing signal. Here, the header area signal 1 notifies the PID1 and PID2 areas. The header area signal 2 notifies the PID3 and PID4 areas. Since the header area has an envelope larger than that of the data area, it is possible to obtain a header area signal showing the header area using both an envelope detector for detecting the envelope of the reproducing signal and the comparator.

The first synchronous signal level detector 66 synchronized with the header area signal 1 generated by the header area detector 64 detects the magnitude Ivfo1 of the vfo1 signal shown in Figure 4. To be specific, a first enable signal (enable 1) having a predetermined width and separated from the starting point of the header area signal 1 by a predetermined distance is generated. After gating the reproducing signal by the first enable signal (enable 1), the magnitude Ivfo1 of the vfo1 signal is detected by detecting the peak-to-peak value of the reproducing signal.

The second synchronous signal level detector 68 synchronized with the header area signal 2 generated by the header area detector 64 detects the magnitude of the vfo3 signal shown in Figure 4. To be specific, the magnitude Ivfo3 of the vfo3 signal is detected by generating a second enable signal (enable 2) having a predetermined width and separated from the starting point of the header area signal 2, gating a reproducing signal by the second enable signal (enable 2), and detecting the peak-to-peak value of the gated reproducing signal.

The balance calculator 70 calculates the ratio of the magnitude Ivfo1 of the vfo1 signal detected by the first synchronous signal level detector 66 to the magnitude Ivfo3 of the vfo3 signal detected by the second synchronous signal level detector 68 as shown in Equation 1. Here, the balance calculator 70 can output the mean value of the balance values obtained from several successive sectors in the radial or tangential direction.

The comparator 72 compares the balance value $K_1$ calculated by the balance calculator 70 with a predetermined reference value $K_0$ and outputs the difference between the two values $K_t$ as shown in Equation 3. Here, $K_0$ may be a value measured in a state where there is no tilt, a default value determined by the system controller of the recording/ reproducing apparatus, or a value measured in the reference state determined by the system.

The land/groove detector 76 receives the reproducing signal and detects whether the current track is the land track or the groove track. In the push-pull signal of the land track, the magnitude of the PID1 and PID2 is smaller than that of PID3 and PID4 as shown in Figure 1B. In the push-pull signal of the groove track, the magnitude of PID1 and PID2 is smaller than the magnitude of the PID3 and PID4. The land/groove detector 76 discriminates the land track from the groove track using the above.

The polarity inverter 78 inverts the polarity of the subtraction value $K_t$ output from the comparator 72 according to the result detected by the land/groove detector 76.

The balance value can be used in order to compensate for tilt.

The tilt controller 74 controls the tilt of the disk according to the subtraction value $K_t$ the polarity of which is inverted and which is output from the polarity inverter 78. Since the sign and magnitude of the subtraction value $K_t$ show the direction and magnitude of the tilt, the tilt of the disk is controlled by feeding back the sign and the magnitude of the subtraction value $K_t$.

The balance value can be used in order to correct detrack.

The detrack compensator 80 controls the detrack of the disk according to the subtraction value $K_t$ the polarity of which is inverted and which is output from the polarity inverter 78. Since the sign and magnitude of the subtraction value $K_t$ shows the direction and magnitude of the detrack, the detrack of the disk is controlled by feeding back the subtraction value $K_t$.

Figure 7 shows the waveforms of the operation of the apparatus shown in Figure 6. Figure 7A shows the waveform of the push-pull signal generated by the reproducing signal generator 62. Figures 7B and 7C show the waveforms of the header area signal 1 and the header area signal 2, respectively, generated by the header area signal generator. Figures 7D and 7E show the waveforms of the first enable signal (enable 1) and the second enable signal (enable 2) used by the first synchronous signal level detector 66 and the second synchronous signal level detector 68.

Figure 8 is a block diagram showing the structure of another embodiment of the apparatus for generating the servo error signal. The apparatus shown in Figure 8 is similar to the apparatus shown in Figure 6 except that the apparatus includes a mirror area signal generator 86 and a mirror signal level detector 88. Therefore, the same reference numerals are used for the same members and a detailed description thereof is omitted.

The mirror area signal generator 86 generates a mirror area signal showing a mirror area from the sum signal RF_sum provided by the reproducing signal generator 62. In the push-pull signal RF_pp, since the mirror signal becomes zero, it is not possible to obtain the mirror area signal by the push-pull signal RF_pp.

It is possible to generate the mirror area signal by the envelope detector and the comparator since the mirror signal has a much lower envelope than the signals of the data area and the header area.

The mirror signal level detector 88 detects the level of the mirror signal from the sum signal RF_sum by the mirror area signal generated by the mirror area signal generator 86. The mirror signal level detector 88 generates a third enable signal (enable 3) having a predetermined period by the mirror area signal generated by the mirror area signal generator, gates the sum signal RF_sum by the third enable signal (enable 3), and detects the peak-to-peak value of the gated sum signal RF_sum.

The balance calculator 72 calculates the balance value $K_l$ as shown in Equation 2 by the level Ivfo1 of the vfo1 signal detected by the first synchronous signal level detector 66, the level Ivfo3 of the vfo3 signal detected by the second synchronous signal level detector 68, and the mirror signal level Io detected by the mirror signal level detector 88. Here, the balance calculator 72 can output the mean value of the balance values obtained from several successive sectors in the radial or tangential direction.

Figures 9A and 9B show waveforms during the operation of the apparatus shown in Figure 8. Figure 9A shows the waveform of the mirror area signal output from the mirror area signal generator 86. Figure 9B shows the waveform of the third enable signal (enable 3).

According to embodiments of the present invention, it is possible to use the push-pull signal RF_pp, the sum signals V1 and V2 of the radial pairs, and the sum signal RF_sum for detecting the servo error since the servo error is detected by the balance value of the synchronous signals. For example, when the push-pull signal RF_pp is used, it is possible to compensate for tilt in the radial direction. When the sum signal RF_sum is used, it is possible to compensate for tilt in the tangential direction.

Figure 11 is a graph showing the relationship between the radial tilt and the balance value K in the method and apparatus according to the present invention. In Figure 11, the horizontal axis denotes radial tilt values and the vertical axis denotes balance values K. In Figure 11, the graph marked with ▲ shows a case where the sum signal RF_sum and the balance value according to Equation 1 are used. The graph marked with ▼ shows a case where the sum signal RF_sum and the balance value according to Equation 2 are used. The graph marked with • shows a case where the push-pull signal RF_pp and the balance value according to Equation 2 are used. The graph marked with ■ shows a case where the push-pull signal RF_pp and the balance value according to Equation 1 are used.

As shown in Figure 11, the radial tilt is best described by the case marked with ■ where the push-pull signal RF_pp and the balance value according to Equation 1 are used. The case marked with • where the push-pull signal RF_pp and the balance value according to Equation 2 are used is also useful for describing the radial tilt.

Therefore, it is possible to determine the tilt by the values according to Equations 1 and 2 using the push-pull signal RF_pp.

Figure 12 is a graph showing the relationship between the detrack and the balance value K in the method and apparatus according to the present invention. In Figure 12, the horizontal axis denotes the amount of the detrack. The vertical axis denotes the balance value K. In Figure 12, the graph marked with ▲ shows a case where the sum signal RF_sum and the balance value according to Equation 1 are used. The graph marked with ▼ shows a case where the sum signal RF_sum and the balance value according to Equation 2 are used. The graph marked with • shows a case where the push-pull signal RF_pp and the balance value according to Equation 2 are used. The graph marked with ■ shows a case where the push-pull signal RF_pp and the balance value according to Equation 1 are used.

As shown in Figure 12, the graph marked with ▲ which shows the case where the sum signal RF_sum and the balance value according to Equation 1 is most affected by the detrack. The graph marked with ■ which shows the case where the push-pull signal RF_pp and the balance value according to Equation 1 is least affected by the detrack.

Therefore, it is possible to determine the detrack by the value according to Equation 1 or 2 using the sum signal RF_sum.

As shown in Figures 11 and 12, it is possible to most effectively detect the amount of tilt when the push-pull signal RF_pp and the balance value according to Equation 1 are used.

The quality of the servo error signal varies according to the quality of the disk and the conditions of the system. However, when the value of the servo error signal is not restricted to some degree, it is not possible to recognize the PID or it is difficult to stably manage the servo. Therefore, in the disk, the value $K_0$ is preferably managed to maintain a prescribed level.

Accordingly, in embodiments of the present invention, it is suggested that the value $K_0$ be restricted to $\pm 0.1$. This value is required to normally reproduce the PID when a standard amount of tilt $\pm 0.35°$ is given. Also, the allowance range of the track control is considered.

Also, it is necessary to restrict the value $K_t$ to no more than a predetermined value to precisely control the servo in the apparatus for reproducing data from the disk. When the quality of the servo is not strictly managed when the data is reproduced, it is not possible to obtain the PID information.

Therefore, in the present invention, it is suggested that the value $K_t$ be restricted to $\pm 0.1$ in the servo operation of the reproducing apparatus.

It is possible to correctly detect the tilt state of the disk without a specific pattern for detecting the servo error by the method for detecting the servo error according to embodiments of the present invention.

It is possible for the recording/reproducing apparatus to stably control the servo and to maintain an optimal recording/reproducing state since the apparatus for generating the servo error signal according to embodiments of the present invention correctly detects the servo error state of the disk.

It is possible for the recording/reproducing apparatus to stably control the servo and to maintain the optimal recording/reproducing state since it is possible to strictly manage the level of the servo error signal which is the basis of controlling the servo by the disk according to embodiments of the present invention.

**Claims**

1. A method of detecting a tilt error of an optical disk in an apparatus for reproducing data from the optical disk, the reproduction being performed in accordance with a subtraction signal (RF_pp) having a first reference signal and a second reference signal, which are recorded to deviate from a centre of a track in opposite directions and which have the same pattern, the method comprising the steps of:

   detecting a first level Ivfo1 of the first reference signal and a second level Ivfo3 of the second reference signal from the subtraction signal (RF_pp);
   determining a balance value $K_1$ according to the following equation:

$$k_1 = \frac{Ivfo1 - Ivfo3}{Ivfo1 + Ivfo3}$$

and determining the tilt error based upon the balance value $K_1$.

2. The method of claim 1, wherein the method is for use with a disk which is divided into sectors and each reference pattern is a synchronous signal included in a header area in which the addresses of the sectors are recorded.

3. The method of claim 1, wherein the method is for use with a disk which includes a land track and a groove track and each reference pattern is a wobble signal for separating the land track from the groove track in a radial direction of the disk.

4. The method of claim 1, wherein the disk is divided into sectors having a predetermined length on the track, each sector comprises the first and second reference signals, and wherein the step of determining the balance value $K_1$ further comprises the step of determining tilt error by averaging balance values obtained from adjacent one of the sectors.

5. The method of claim 1, further comprising the steps of:

detecting an optical signal reflected off the disk, and generating a reproducing signal including sum signals V1 and V2, each being the respective summed output of radial pairs of detecting elements, a sum signal RF_sum of the detecting elements, being equal to V1 plus V2, and a push-pull signal RF_pp of the detecting elements, being equal to V2 minus V1, from an optical signal reflected from the disk;
generating a header area signal identifying a header area from the reproducing signal.

6. The method of claim 1, further comprising the step of:

determining a difference Kt between the difference value K1 and a reference value K0.

7. The method of claim 6, wherein the disk further comprises a land track and a groove track, and the method further comprises the step of inverts 9 a polarity of the difference Kt according to the output signal from a Land/Groove Detector (76) which is operable to detect whether a land or a groove track is the current track.

8. The method of claim 7, further comprising the step of controlling tilt of the disk according to the state of said polarity inversion.

9. The method of claim 1, wherein the disk comprises a land track, a groove track, and a wobble for separating the land track from the groove track, said wobble being formed in a side wall of a track, and an amount of detrack is determined by the amount of variation of a generated wobble signal caused by variation of the wobble in a radial direction.

10. The method of clam 1, wherein the first and second magnitudes of the first and second synchronous signals, respectively, are detected from the push pull signal RF_pp.

11. The method of claim 10, wherein the reference value Ko is a measured difference value when there is no tilt of the disk.

12. The method of claim 1, further comprising the step of compensating for detrack of the disk according to the output of the polarity inversion.

13. The method of claim 12, wherein the reference value Ko is a difference value measured when there is no detrack of the disk.

14. The method of claim 5, wherein first and second magnitudes of the first and second of synchronous signals, respectively, are detected from the sum signal RF_sum.

**Patentansprüche**

1. Verfahren zum Detektieren eines Neigungsfehlers einer optischen Platte in einer Vorrichtung zur Wiedergabe von Daten von der optischen Platte, wobei die Wiedergabe in Übereinstimmung mit einem Subtraktionssignal (RF_pp) durchgeführt wird, das ein erstes Referenzsignal und ein zweites Referenzsignal hat, die aufgezeichnet werden, um von einer Mitte einer Spur in entgegengesetzte Richtungen abzuweichen und die dasselbe Muster haben, das Verfahren umfasst die folgenden Schritte:

   Detektieren eines ersten Pegels Ivfo1 des ersten Referenzsignals und eines zweiten Pegels Ivfo3 des zweiten Referenzsignals aus dem Subtraktionssignal (RF_pp),
   Bestimmen eines Gleichgewichtswertes $K_1$ entsprechend der folgenden Gleichung:

$$k_1 = \frac{Ivfo1 - Ivfo3}{Ivfo1 + Ivfo3}$$

   und Bestimmen des Neigungsfehlers auf Basis des Gleichgewichtswertes $K_1$.

2. Verfahren nach Anspruch 1, wobei das Verfahren zur Verwendung mit einer Platte ist, die in Sektoren aufgeteilt ist, und wobei jedes Referenzsignal ein Synchronsignal ist, das in einem Header-Bereich enthalten ist, in dem die Adressen der Sektoren aufgezeichnet sind.

3. Verfahren nach Anspruch 1, wobei das Verfahren zur Verwendung mit einer Platte ist, die eine Land-Spur und eine Groove-Spur enthält, und wobei jedes Referenzmuster ein Wobble-Signal zum Trennen der Land-Spur von der Groove-Spur in einer radialen Richtung der Platte ist.

4. Verfahren nach Anspruch 1, wobei die Platte in Sektoren mit einer vorgegebenen Länge auf der Spur unterteilt ist und jeder Sektor das erste und das zweite Referenzsignal umfasst und wobei der Schritt des Bestimmens des Gleichgewichtswertes $K_1$ des Weiteren den Schritt des Bestimmens des Neigungsfehlers durch Mittelung von Gleichgewichtswerten, die von den an die Sektoren angrenzenden erhalten wurden, umfasst.

5. Verfahren nach Anspruch 1, das des Weiteren die folgenden Schritte umfasst:

   Detektieren eines von der Platte reflektierten optischen Signals und Erzeugen eines Wiedergabesignals, das die Summensignale V1 und V2 enthält, wobei jedes die jeweilig summierte Ausgabe von radialen Paaren von Detektionselementen ist, ein Summensignal RF_sum der Detektionselemente gleich V1 + V2 ist, und ein Push-Pull-Signal RF_pp der Detektionselemente gleich V2 - V1 ist, aus dem von der Platte reflektierten Signal und Generieren eines Header-Bereichssignals, das einen Header-Bereich aus dem Wiedergabesignal identifiziert.

6. Verfahren nach Anspruch 1, das des Weiteren den folgenden Schritt umfasst:

   Bestimmen einer Differenz Kt zwischen dem Differenzwert K1 und einem Referenzwert K0.

7. Verfahren nach Anspruch 6, wobei die Platte des Weiteren eine Land-Spur und eine Groove-Spur umfasst und das Verfahren weiterhin den Schritt des Umkehrens eines Vorzeichens der Differenz Kt entsprechend dem Ausgangssignal von einem Land-/Groove-Detektor (76), der funktionsfähig ist, um zu erkennen, ob die aktuelle Spur eine Land- oder Groove-Spur ist, umfasst.

8. Verfahren nach Anspruch 7, das des Weiteren den Schritt des Steuerns der Platte entsprechend dem Zustand der Vorzeichenumkehrung umfasst.

9. Verfahren nach Anspruch 1, wobei die Platte eine Land-Spur, eine Groove-Spur und einen Wobble zum Trennen der Land-Spur von der Groove-Spur enthält, der Wobble in einer Seitenwand einer Spur ausgebildet ist und eine Größe der Spurführungsabweichung durch die Größe der Änderung eines erzeugten Wobble-Signals, das durch Änderung des Wobbles in einer radialen Richtung verursacht wird, bestimmt wird.

**10.** Verfahren nach Anspruch 1, wobei die erste und die zweite Stärke jeweils des ersten und des zweiten Synchronsignals aus dem Push-Pull-Signal RF_pp detektiert werden.

**11.** Verfahren nach Anspruch 10, wobei der Referenzwert K0 ein Referenzwert ist, gemessen während keine Neigung der Platte vorhanden ist.

**12.** Verfahren nach Anspruch 1, das des Weiteren den Schritt des Kompensierens von Spurführungsabweichung der Platte entsprechend der Ausgabe der Vorzeichenumkehrung umfasst.

**13.** Verfahren nach Anspruch 12, wobei der Referenzwert K0 ein Differenzwert ist, gemessen während keine Spurführungsabweichung der Platte vorhanden ist.

**14.** Verfahren nach Anspruch 5, wobei die erste und die zweite Stärke des jeweils ersten und zweiten Synchronsignals aus dem Summensignal RF_sum detektiert werden.

## Revendications

**1.** Procédé de détection d'une erreur d'inclinaison d'un disque optique dans un dispositif pour reproduire des données à partir du disque optique, la reproduction étant exécutée conformément à un signal de soustraction (RF_pp) ayant un premier signal de référence et un second signal de référence, lesquels sont enregistrés pour s'écarter d'un centre d'une piste dans des directions opposées et qui ont le même motif, le procédé comportant les étapes consistant à :

détecter un premier niveau Ivfo1 du premier signal de référence et un second niveau Ivfo3 du second signal de référence à partir du signal de soustraction (RF_pp),
déterminer une valeur de reste $K_1$ conformément à l'équation suivante :

$$K_1 = \frac{Ivfo1 - Ivfo3}{Ivfo1 + Ivfo3}$$

et déterminer l'erreur d'inclinaison sur la base de la valeur de reste $K_1$.

**2.** Procédé selon la revendication 1, dans lequel le procédé est destiné à une utilisation avec un disque qui est divisé en secteurs et chaque motif de référence est un signal synchrone inclus dans une zone d'en-tête dans laquelle les adresses des secteurs sont enregistrées.

**3.** Procédé selon la revendication 1, dans lequel le procédé est destiné à une utilisation avec un disque qui inclut une piste de méplat et une piste de sillon et chaque motif de référence est un signal de vobulation pour séparer la piste de méplat de la piste de sillon dans une direction radiale du disque.

**4.** Procédé selon la revendication 1, dans lequel le disque est divisé en secteurs ayant une longueur prédéterminée sur la piste, chaque secteur comporte les premier et second signaux de référence, et dans lequel l'étape de détermination de la valeur de reste $K_1$ comporte en outre l'étape consistant à déterminer une erreur d'inclinaison en mettant en moyenne les valeurs de reste obtenues à partir du secteur adjacent parmi les secteurs.

**5.** Procédé selon la revendication 1, comportant en outre les étapes consistant à :

détecter un signal optique réfléchi hors du disque, et générer un signal de reproduction incluant les signaux d'addition V1 et V2, chacun étant la sortie additionnée respective de paires radiales d'éléments de détection, un signal d'addition RF_sum des éléments de détection, étant égal à V1 plus V2, et un signal symétrique RF_pp des éléments de détection, étant égal à V2 moins V1, à partir d'un signal optique réfléchi par le disque, générer un signal de zone d'en-tête identifiant une zone d'en-tête à partir du signal de reproduction.

**6.** Procédé selon la revendication 1, comportant en outre l'étape consistant à :

déterminer une différence Kt entre la valeur de différence K1 et une valeur de référence K0.

**7.** Procédé selon la revendication 6, dans lequel le disque comportant en outre une piste de méplat et une piste de sillon, et le procédé comporte en outre l'étape consistant à inverser une polarité de la différence Kt conformément au signal de sortie provenant d'un Détecteur de Méplat/Sillon (76) qui est opérationnel pour détecter si une piste de méplat ou de sillon est la piste courante.

**8.** Procédé selon la revendication 7, comportant en outre l'étape consistant à commander l'inclinaison du disque conformément à l'état de ladite inversion de polarité.

**9.** Procédé selon la revendication 1, dans lequel le disque comporte une piste de méplat, une piste de sillon, et une vobulation pour séparer la piste de méplat de la piste de sillon, ladite vobulation étant formée dans une paroi latérale de la piste, et une quantité de sortie de piste est déterminée par la quantité de variation d'un signal de vobulation généré provoquée par la variation de la vobulation dans une direction radiale.

**10.** Procédé selon la revendication 1, dans lequel les première et seconde grandeurs des premier et second signaux synchrones, respectivement, sont détectées à partir du signal symétrique RF_pp.

**11.** Procédé selon la revendication 10, dans lequel la valeur de référence Ko est une valeur de différence mesurée lorsqu'il n'existe pas d'inclinaison du disque.

**12.** Procédé selon la revendication 1, comportant en outre l'étape consistant à compenser une sortie de piste du disque conformément à la sortie de l'inversion de polarité.

**13.** Procédé selon la revendication 12, dans lequel la valeur de référence Ko est une valeur de différence mesurée lorsqu'il n'existe pas de sortie de piste du disque.

**14.** Procédé selon la revendication 5, dans lequel les première et seconde grandeurs des premier et second signaux synchrones, respectivement, sont détectées à partir du signal d'addition RF_sum.

# FIG. 1A

GROOVE
LAND
GROOVE

25

# FIG. 1B

# FIG. 2A

LAND
GROOVE
LAND

25

# FIG. 2B

# FIG. 3

# FIG. 4A

# FIG. 4B

# FIG. 5

TANGENTIAL
DIRECTION →

EP 1 308 940 B1

# FIG. 6

EP 1 308 940 B1

# FIG. 7

HEADER AREA

lvfo1

lvfo3

(a)

HEADER AREA SIGNAL 1

(b)

HEADER AREA SIGNAL 2

(c)

ENABLE 1

(d)

ENABLE 2

(e)

# FIG. 8

# FIG. 9

(a) MIRROR AREA SIGNAL

(b) ENABLE 3

# FIG. 10

REFERENCE PIT A

REFERENCE PIT B

EP 1 308 940 B1

# FIG. 11

Legend:
- RF_pp, (Ivfo1−Ivfo2)/(Ivfo1+Ivfo2)
- RF_pp, (Ivfo1−Ivfo2)/10
- RF_sum, (Ivfo1−Ivfo2)/(Ivfo1+Ivfo2)
- RF_sum, (Ivfo1−Ivfo2)/10

Y-axis: VALUE k (0.6, 0.4, 0.2, 0.0, −0.2, −0.4, −0.6)
X-axis: RADIAL TILT (DETREE) (−1.0, −0.5, 0.0, 0.5, 1.0)

# FIG. 12

Legend:
- RF_pp, (Ivfo1−Ivfo2)/(Ivfo1+Ivfo2)
- RF_pp, (Ivfo1−Ivfo2)/10
- RF_sum, (Ivfo1−Ivfo2)/(Ivfo1+Ivfo2)
- RF_sum, (Ivfo1−Ivfo2)/10

Y-axis: VALUE k (0.5, 0.4, 0.3, 0.2, 0.1, 0.0, −0.1, −0.2, −0.3, −0.4, −0.5)
X-axis: DETRACK (μm) (−0.10, −0.05, 0.00, 0.05, 0.10)

**EP 1 308 940 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2307770 A

- EP 0210330 A